# EUROPÄISCHE PATENTANMELDUNG

(11) **EP 4 838 133 A1**
(43) Veröffentlichungstag der Anmeldung: **11.11.2026**
(21) Anmeldenummer: 25175303.4
(22) Anmeldetag: 09.05.2025
(51) Int. Cl.: F23D 14/66, F23L 15/04, F28D 7/10, F28F 1/42

(54) **RIPPENREKUPERATOR UND REKUPERATORBRENNER**

(71) Anmelder: WS-Wärmeprozesstechnik GmbH, 71272 Renningen (DE)
(72) Erfinder: Wünning, Joachim A., 71229 Leonberg (DE); Wünning, Joachim G., 71229 Leonberg (DE)
(74) Vertreter: Patentanwälte Ruff, Wilhelm, Beier, Dauster & Partner mbB

(57) **Zusammenfassung**

Die Erfindung betrifft einen Rippenrekuperator für einen Rekuperatorbrenner umfassend eine zumindest abschnittsweise rohrförmige Innenwand (20), eine zumindest abschnittsweise rohrförmige Außenwand (25) und eine zwischen der Innenwand (20) und der Außenwand (25) angeordnete, zumindest abschnittsweise rohrförmige, wärmeübertragende erste Trennwand (21), wobei die Innenwand (20), die Außenwand (22) und die erste Trennwand (21) koaxial angeordnet sind, wobei zwischen der Innenwand (20) und der Außenwand (25) eine zumindest abschnittsweise rohrförmige, wärmeübertragende zweite Trennwand (22) vorgesehen ist, sodass zwischen der Innenwand (20) und der Außenwand (25) mindestens drei Strömungskanäle gebildet sind, wobei die erste Trennwand (21) und/oder die zweite Trennwand (22) an ihrer jeweiligen Innenseite und/oder an ihrer jeweiligen Außenseite Rippen (210, 220) aufweist/aufweisen. Die Erfindung betrifft weiter einen Rekuperatorbrenner mit einem Rippenrekuperator.

## Beschreibung

### ANWENDUNGSGEBIET UND STAND DER TECHNIK

Die Erfindung betrifft einen Rippenrekuperator für einen Rekuperatorbrenner. Die Erfindung betrifft weiter einen Rekuperatorbrenner mit einem Rippenrekuperator.

Als Rekuperatorbrenner wird ein Brenner bezeichnet, der mit einem Rekuperator zur Vorwärmung einer Verbrennungsluft durch Abgas ausgerüstet ist.

Rekuperatorbrenner werden beispielsweise in gasbeheizten Industrieöfen eingesetzt, insbesondere in Industrieöfen für eine Wärmebehandlung von Metallen bei Temperaturen von 500 °C bis 1300 °C. Sie dienen unter anderem dem Erzeugen von Prozesswärme, beispielsweise der direkten oder indirekten Beheizung von Industrieöfen. Bei der direkten Beheizung findet eine Verbrennung in einem Ofenraum statt. Bei der indirekten Beheizung findet die Verbrennung in einem gegenüber dem Ofenraum abgeschlossenen Raum, beispielsweise innerhalb eines in den Ofenraum ragenden, gegen diesen jedoch abgeschlossenen Strahlrohrs statt, wobei der Raum oder das Stahlrohr durch die Verbrennung erwärmt wird und Wärmestrahlung abgibt.

Rekuperatoren umfassen für einen indirekten Wärmeaustausch eine wärmeübertragende, beispielsweise rohrförmige Trennwand. In Ausgestaltungen sind an einer Außenseite und/oder Innenseite der rohrförmigen Trennwand Erhebungen zur Vergrößerung einer Fläche für einen Wärmeübergang vorgesehen sind. Die Erhebungen sind insbesondere einteilig mit der Trennwand gefertigt. In anderen Ausgestaltungen weist die Trennwand zumindest in einem Rohrabschnitt eine Vielzahl an radial orientierten, hohlen Zacken auf, die in dichter Folge entlang eines Umfanges der Trennwand ringförmig angeordnet sind. Ein derartiger Rekuperator ist beispielsweise aus der EP 0 773 407 A2 bekannt, auf deren Inhalt hiermit vollumfänglich Bezug genommen wird. Massive Erhebungen und hohle Zacken werden vorstehend und nachfolgend allgemein als Rippen bezeichnet und Rekuperatoren, welche eine Trennwand mit massiven Erhebungen und/oder hohlen Zacken aufweisen, als Rippenrekuperatoren. Rippenrekuperatoren sind aufgrund eines einfachen und robusten Aufbaus in vielen Anwendungen vorteilhaft einsetzbar.

Bei Rekuperatorbrennern mit einer Leistung bis etwa 200 kW wird mit einem herkömmlichen Rippenrekuperator eine Luftvorwärmung im Bereich von 40 bis 60% der Ofentemperatur erreicht, entsprechend ein feuerungstechnischer Wirkungsgrad von 60 bis 70%. Bei den in der Vergangenheit günstigen Erdgaspreisen entsprach die Bauart herkömmlicher Rippenrekuperatoren einem ausgewogenem Verhältnis zwischen einem Aufwand für eine Herstellung des Rekuperators und einer Gasersparnis.

### AUFGABE UND LÖSUNG

Es sind Aufgaben der Erfindung, einen verbesserten Rippenrekuperator für einen Rekuperatorbrenner sowie einen Rekuperatorbrenner zu schaffen, welche einen verbesserten Wirkungsgrad des Rekuperatorbrenners ermöglichen und insbesondere auch für eine Verwendung von Wasserstoff (H2)- und/oder Ammoniak (NH3)-haltigen Brenngasen, synthetischen Erdgasen und/oder Schwachgasen mit einem niedrigen Heizwert geeignet sind.

Diese Aufgaben werden gelöst durch den Rippenrekuperator und den Rekuperatorbrenner mit den Merkmalen der unabhängigen Ansprüche. Vorteilhafte Ausgestaltungen ergeben sich aus den Unteransprüchen.

Gemäß einem ersten Aspekt wird ein Rippenrekuperator umfassend eine zumindest abschnittsweise rohrförmige Innenwand, eine zumindest abschnittsweise rohrförmige Außenwand, eine zwischen der Innenwand und der Außenwand angeordnete, zumindest abschnittsweise rohrförmige, wärmeübertragende erste Trennwand und eine zwischen der Innenwand und der Außenwand angeordnete, zumindest abschnittsweise rohrförmige, wärmeübertragende zweite Trennwand geschaffen. Die Innenwand, die Außenwand, die erste Trennwand und die zweite Trennwand sind koaxial angeordnet. Zwischen der Innenwand und der Außenwand sind durch die Trennwände mindestens drei, insbesondere ringförmige Strömungskanäle gebildet. Die erste Trennwand und/oder die zweite Trennwand weisen an ihrer jeweiligen Innenseite und/oder an ihrer jeweiligen Außenseite Rippen auf.

Im Zusammenhang mit der Anmeldung werden die Wörter "ein", "eine", "eines", etc. lediglich als unbestimmte Artikel verwendet und sollen nicht als Zahlwort interpretiert werden. Die Begriffe "erster" und "zweiter" dienen lediglich der Unterscheidung von Elementen und geben keine Reihenfolge der Elemente an.

Durch die zwei, insbesondere jeweils Rippen aufweisenden Trennwände wird eine Wärmaustauschfläche vergrößert. Insbesondere kann ein wärmeabgebendes Abgas durch einen mittleren Strömungskanal zwischen den zwei Trennwänden geführt werden. Ein zu erwärmendes Fluid, beispielsweise Luft, oder zwei unterschiedliche Fluide, beispielsweise ein Brenngas und Verbrennungsluft, können im Gebrauch durch die zwei mit dem mittleren Strömungskanal über die erste Trennwand bzw. die zweite Trennwand im Wärmeaustausch stehenden Strömungskanäle für eine Vorwärmung geführt werden. Für eine maximale Vergrößerung der Wärmeaustauschfläche weisen die erste Trennwand und die zweite Trennwand an ihrer jeweiligen Innenseite und an ihrer jeweiligen Außenseite Rippen auf. Durch die Vergrößerung der Wärmeaustauschfläche kann ein Wirkungsgrad eines Rekuperatorbrenner bis in einen Bereich von 80 bis über 90% bei vertretbaren Mehrkosten für eine Herstellung des Rekuperators angehoben werden.

In einem Betrieb ist insbesondere vorgesehen, dass ein wärmeabgebendes Abgas durch einen durch die erste und die zweite Trennwand begrenzten, mittleren Strömungskanal geführt wird.

Insbesondere können bei einer Verwendung des Rippenrekuperators in einem Rekuperatorbrenner in einem Betrieb mit einem höher kalorischen Brenngas, beispielsweise mit einem Erdgas, zwei durch die an den mittleren Strömungskanal angrenzenden Strömungskanäle geführte Luftströme vorgewärmt werden. Der Rekuperatorbrenner ist in Ausgestaltungen eingerichtet, um trotz hoher Vorwärmung der Luft einen Betrieb zu ermöglichen, bei welchem eine erhöhte NOx-Bildung vermieden wird. Beispielsweise ist in Ausgestaltungen vorgesehen, dass vorgewärmte Primärluft mit einem definierten Brenngas/Luftverhältnis einer Brennkammer über einen Strömungskanal zugeführt wird, insbesondere einen innenliegend zu dem mittleren Strömungskanal angeordneten Strömungskanal, und dass vorgewärmte Sekundärluft stromabwärts zu der Brennkammer einem Ofenraum über einen weiteren Strömungskanal zugeführt wird, insbesondere einen außenliegend zu dem mittleren Strömungskanal angeordneten Strömungskanal. In Ausgestaltungen sind insbesondere Maßnahmen ergriffen, um die Sekundärluft derart zuzuführen, dass eine flammenlose Oxidation zur Vermeidung von NOx-Bildung erzielt wird.

Die Gestaltung mit drei stofflich getrennten Strömungskanälen erlaubt auch einen Betrieb eines Rekuperatorbrenners mit einem erfindungsgemäßen Rippenrekuperator unter Verwendung von H2- und/oder NH3-haltigen Brenngasen und/oder Schwachgasen, insbesondere von CO2-freien Brenngasen, wobei sowohl die Verbrennungsluft als auch das Brenngas für eine Erhöhung des Wirkungsgrades erwärmt werden. Beispielsweise ist in Ausgestaltungen vorgesehen, dass vorgewärmtes Brenngas der Brennkammer über einen Strömungskanal zugeführt wird, insbesondere einen innenliegend zu dem mittleren Strömungskanal angeordneten Strömungskanal, und vorgewärmte Sekundärluft stromabwärts zu der Brennkammer einem Ofenraum über einen weiteren Strömungskanal zugeführt wird, insbesondere einen außenliegend zu dem mittleren Strömungskanal angeordneten Strömungskanal.

In Ausgestaltungen ist zwischen der ersten Trennwand und der zweiten Trennwand eine zumindest abschnittsweise rohrförmige dritte Trennwand vorgesehen, sodass ein zwischen der ersten Trennwand und der zweiten Trennwand angeordneter mittlerer Strömungskanal in zwei Teilkanäle unterteilt ist. Durch die dritte Trennwand wird der mittlere Strömungskanal, durch welchen insbesondere bei Verwendung des Rippenrekuperators in einem Rekuperatorbrenner ein wärmeabgebendes Abgas geführt wird, zumindest abschnittsweise in zwei Teilkanäle unterteilt. Durch die Unterteilung kann eine Prozessführung geeignet beeinflusst werden.

Insbesondere sind zwei durch die dritte Trennwand separierte Teilkanäle parallel durchströmbar und weisen einen gemeinsamen Einlass und/oder einen gemeinsamen Auslass auf. Die zwei Teilkanäle sind insbesondere durch ein über den gemeinsamen Einlass einströmendes Abgas bei Verwendung des Rekuperatorbrenners parallel durchströmbar.

Die dritte Trennwand ist in Ausgestaltungen an ihrer Innenseite und/oder an ihrer Außenseite, frei von Rippen. In Ausgestaltungen dient die dritte Trennwand nicht als Wärmaustauschfläche. In Ausgestaltungen ist die dritte Trennwand aus einem Material mit einer geringen Wärmeleitfähigkeit. In anderen Ausgestaltungen dient die dritte Trennwand als Wärmaustauschfläche.

In Ausgestaltungen dient ein von der Innenwand begrenzten Innenkanal als Zugangskanal, in welchem beispielsweise eine Zündvorrichtung und/oder Einrichtungen für einen Flammenüberwachung angeordnet sind.

In Ausgestaltungen ist vorgesehen, dass in dem von der Innenwand begrenzten Innenkanal eine zumindest abschnittsweise rohrförmige vierte Trennwand vorgesehen ist, sodass zwischen der Innenwand und der vierten Trennwand ein vierter Strömungskanal gebildet ist. Der vierte Strömungskanal mündet bei einer Verwendung des Rippenrekuperators in einem Rekuperatorbrenner insbesondere in der Brennkammer. Innenliegend zu der vierten Trennwand bleibt dabei ein Zugangskanal vorhanden, in welchem beispielsweise eine Zündvorrichtung und/oder Einrichtungen für einen Flammenüberwachung angeordnet sind. Der vierte Strömungskanal grenzt nicht an den durch die erste Trennwand und die zweite Trennwand begrenzten, mittleren Strömungskanal an. Durch den vierten Strömungskanal kann bei einer Verwendung des Rippenrekuperators in einem Rekuperatorbrenner in einem Betrieb mit einem höher kalorischen Brenngas, beispielsweise mit einem Erdgas, das Brenngas geführt werden. Das Brenngas wird dabei nicht durch das Abgas vorgewärmt. Eine Vorwärmung von Erdgas ist insbesondere aufgrund einer Rußbildung nicht erwünscht. Bei einer Verwendung des Rippenrekuperators in einem Rekuperatorbrenner in einem Betrieb mit einem anderen Brenngas, insbesondere einem Wasserstoff-haltigen Brenngas, kann das Brenngas vorgewärmt werden. Über den zusätzlichen Strömungskanal kann dabei eine Startluft, welche beispielsweise in die Brennkammer eingebracht werden soll, geführt werden.

In Ausgestaltungen umfasst der Rippenrekuperator eine erste Trennwand, eine zweite Trennwand und eine vierte Trennwand, ohne dass eine dritte Trennwand vorgesehen ist. Die vierte Trennwand ist in Ausgestaltungen zumindest an ihrer Innenseite, insbesondere an ihrer Innenseite und ihrer Außenseite, frei von Rippen. Die vierte Trennwand dient nicht als Wärmeaustauschwand und

In Ausgestaltungen sind eine die erste Trennwand umfassend Baugruppe des Rekuperators und eine die zweite Trennwand umfassende Baugruppe des Rekuperators über eine Flanschverbindung lösbar miteinander verbunden sind. Die Flanschverbindung erlaubt eine bedarfsweise Trennung der Baugruppen. Insbesondere ist in Ausgestaltungen vorgesehen, dass eine Trennung der Baugruppen derart möglich ist, dass die erste Trennwand und/oder die zweite Trennwand frei liegen, sodass die jeweiligen Innenseiten und Außenseiten der ersten Trennwand und/oder der zweiten Trennwand für eine Reinigung frei liegen.

In Ausgestaltungen ist zumindest eine der ersten Trennwand und der zweite Trennwand oder sind beide Trennwände aus Keramik. In Ausgestaltungen ist zumindest eine der ersten Trennwand und der zweite Trennwand oder sind beide Trennwände aus Stahl. Die Rippen sind insbesondere einteilig mit der jeweiligen Trennwand gefertigt.

Gemäß einem zweiten Aspekt wird ein Rekuperatorbrenner umfassend einen Rippenrekuperator geschaffen. Der Rekuperatorbrenner ist wahlweise mit einem Erdgas oder einem Wasserstoff- und/oder Ammoniak-haltigen Brenngas und/oder einem Schwachgas, insbesondere mit CO2-freien Brenngasen betreibbar.

Der Rekuperatorbrenner weist einen ersten Zufuhr-Anschluss für eine Zufuhr von Sekundärluft auf, wobei der erste Zufuhr-Anschluss mit dem zwischen der Außenwand und der zweiten Trennwand gebildeten Strömungskanal fluidisch verbunden ist. An dem ersten Zufuhr-Anschluss ist in Ausgestaltungen ein Einstellventil vorgesehen, sodass eine Menge der über den ersten Zufuhr-Anschluss zugeführten Sekundärluft variabel ist. Der zwischen der Außenwand und der zweiten Trennwand gebildeten Strömungskanal mündet insbesondere stromabwärts einer Brennkammer in einen Ofenraum.

Der Rekuperatorbrenner weist weiter einen Abgas-Anschluss für eine Abfuhr von Abgas auf. In Ausgestaltungen ist der Abgas-Anschluss mit dem zwischen der ersten Trennwand und der zweiten Trennwand gebildeten mittleren Strömungskanal fluidisch verbunden. An dem Abgas-Anschluss ist in Ausgestaltungen ein Einstellventil vorgesehen, sodass eine über den Abgas-Anschluss abgeführte Abgas-Menge variabel ist. Der zwischen der ersten Trennwand und der zweiten Trennwand gebildeten mittlere Strömungskanal ist insbesondere fluidisch mit dem Ofenraum verbunden, sodass ein Abgas aus dem Ofenraum in den mittleren Strömungskanal einströmen kann.

Der Rekuperatorbrenner weist einen zweiten Zufuhr-Anschluss auf. In Ausgestaltungen ist vorgesehen, dass der zweite Zufuhr-Anschluss mit dem zwischen der Innenwand und der ersten Trennwand gebildeten Strömungskanal fluidisch verbunden ist. Der zweite Zufuhr-Anschluss ist wahlweise als Anschluss für eine Zufuhr von Primärluft, insbesondere für einen Betrieb mit Erdgas, und/oder als Anschluss für eine Zufuhr von Brenngas, insbesondere Wasserstoff, Wasserstoff-haltigem Brenngas, Ammoniakhaltigem Brenngas und/oder Schwachgas, nutzbar. An dem zweiten Zufuhr-Anschluss ist in Ausgestaltungen ein Einstellventil vorgesehen.

In Ausgestaltungen ist ein dritter Zufuhr-Anschluss vorgesehen, wobei der dritte Zufuhr-Anschluss mit dem zwischen der Innenwand und der vierten Trennwand gebildeten Strömungskanal fluidisch verbunden ist. Der dritte Zufuhr-Anschluss ist wahlweise als Anschluss für eine Zufuhr von Erdgas und/oder als Anschluss für eine Zufuhr von Startluft für einen Betrieb mit einem alternative Brenngas, beispielsweise einem Wasserstoffbetrieb, nutzbar ist. An dem dritten Zufuhr-Anschluss ist in Ausgestaltungen ein Einstellventil vorgesehen.

In Gestaltungen mit einem zweiten Zufuhr-Anschluss und einem dritten Zufuhr-Anschluss ist ein Wechsel von einem Betrieb mit Erdgas auf einen Betrieb mit einem alternativen Brenngas, beispielsweise mit Wasserstoff, auf einfache Weise durch Austausch des zweiten und des dritten Anschlusses möglich.

In Ausgestaltungen umfasst der Rippenrekuperator einen Düsenkranz, der an einer heißen Seite des Rippenrekuperators angeordnet ist. Der Düsenkranz umfasst mehrere, über dem Umfang verteilt angeordnete Düsen, wobei die Düsen mit einem zwischen der Außenwand und der innenliegend der Außenwand angeordneten zweiten Trennwand gebildeten Strömungskanal fluidisch verbunden sind. Die Düsen münden in einen Ofenraum stromabwärts einer Brennkammer des Rekuperators. Die Düsen sind insbesondere eingerichtet, um eine flammenlose Oxidation für eine Vermeidung einer NOx-Bildung zu erzielen.

In Ausgestaltungen umfasst der Düsenkranz einen die Düsen aufweisenden Ringkörper, wobei ein Innenraum des Ringkörpers mit einem zwischen der ersten Trennwand und der zweiten Trennwand gebildeten Strömungskanal fluidisch verbunden ist. Für ein Einströmen von Abgas in einen Innenraum des Ringkörpers weist der Ringkörper mehreren, insbesondere jeweils zwischen zwei Düsen angeordnete, Durchlassöffnungen auf.

In Ausgestaltungen umgibt der Düsenkranz eine Brennkammer des Rekuperatorbrenners, wobei ein zwischen der ersten Trennwand und der Innenwand gebildeter Strömungskanal in der Brennkammer mündet. Der zwischen der ersten Trennwand und der Innenwand gebildete Strömungskanal ist dabei durch eine Wandung der Brennkammer von einem die Brennkammer umgebenden Abschnitt eines Innenraums des Düsenkranz fluidisch getrennt.

Sofern vorhanden mündet in Ausgestaltungen auch der vierte Strömungskanal, welcher innenliegend der Innenwand angeordnet ist, in der Brennkammer.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:
- Fig. 1: einen Rekuperatorbrenner umfassend einen Rekuperator in einer teilweise geschnittenen Darstellung entlang einer Längsachse;
- Fig. 2: in einem Querschnitt ein Ausführungsbeispiel eines Rippenrekuperators für den Rekuperatorbrenner gemäß Fig. 1;
- Fig. 3: der Rekuperatorbrenner gemäß Fig. 1 in einer perspektivischen Darstellung; und
- Fig. 4: einen Düsenkranz des Rekuperators gemäß Fig. 1 und 3 in Alleinstellung in einer perspektivischen Darstellung.

### DETAILLIERTE BESCHREIBUNG DER AUSFÜHRUNGSBEISPIELE

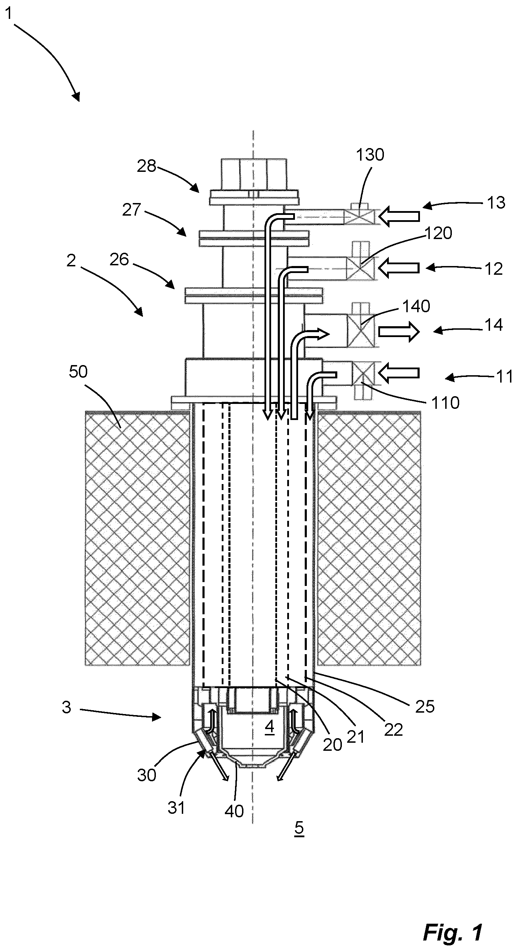

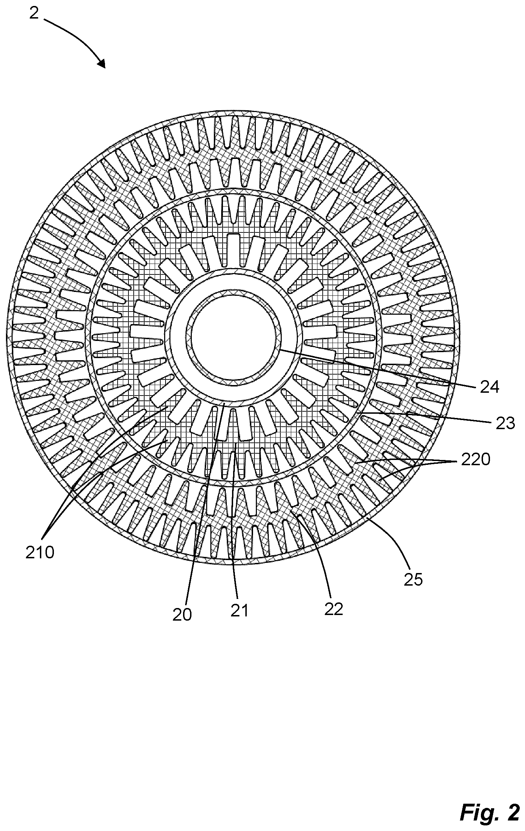

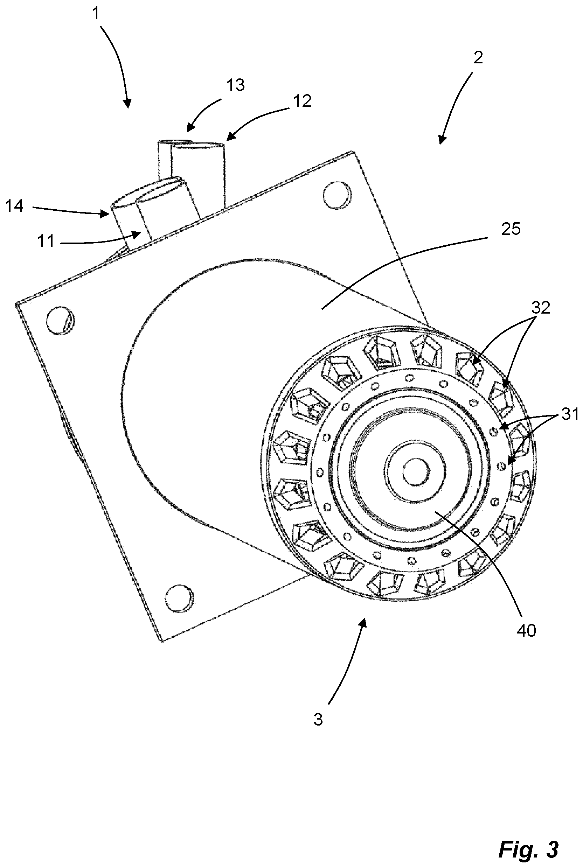

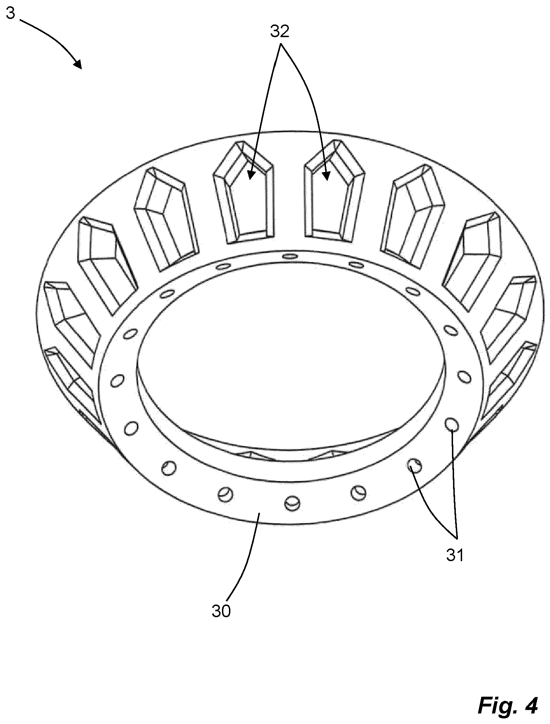

Fig. 1 zeigt schematisch einen Rekuperatorbrenner 1 mit einem Rippenrekuperator 2, der an einer Ofenwand 50 eines Ofenraums 5 angebracht ist. Der Rippenrekuperator 2 weist an seiner heißen Seite einen Düsenkranz 3 auf. Fig. 2 zeigt schematisch in einem Querschnitt ein Ausführungsbeispiel eines Rippenrekuperators 2 für den Rekuperatorbrenner 1 gemäß Fig. 1. Fig. 3 zeigt schematisch den Rekuperatorbrenner 1 gemäß Fig. 1 in einer perspektivischen Darstellung. Fig. 4 zeigt den Düsenkranz 3 in Alleinstellung in einer perspektivischen Darstellung.

Der dargestellte Rippenrekuperator 2 umfasst eine (in Fig. 1 schematisch als gestrichelte Linie dargestellte) zumindest abschnittsweise rohrförmige Innenwand 20, eine zumindest abschnittsweise rohrförmige Außenwand 25, eine (in Fig. 1 schematisch als gestrichelte Linie dargestellte) zumindest abschnittsweise rohrförmige zwischen der Innenwand 20 und der Außenwand 22 angeordnete, wärmeübertragende erste Trennwand 21 und eine (in Fig. 1 schematisch als gestrichelte Linie dargestellte) zumindest abschnittsweise rohrförmige, zwischen der Innenwand 20 und der Außenwand 25 angeordnete, wärmeübertragende zweite Trennwand 22.

Durch die erste und die zweite Trennwand werden zwischen der Innenwand 20 und der Außenwand 25 mindestens drei Strömungskanäle gebildet.

In dem dargestellten Ausführungsbeispiel ist die erste Trennwand 21 radial außenliegend zu der Innenwand 20 angeordnet, sodass zwischen der Innenwand 20 und der ersten Trennwand 21 ein innenliegender Strömungskanal gebildet wird. Die zweite Trennwand 22 ist radial innenliegend zu der Außenwand 25 angeordnet, sodass zwischen der Außenwand 25 und der zweiten Trennwand 22 ein außenliegender Strömungskanal gebildet wird. Zwischen den zwei Trennwänden 21, 22 ist ein mittlerer Strömungskanal gebildet.

Wie in Fig. 2 dargestellt, weisen in dem dargestellten Ausführungsbeispiel die erste Trennwand 21 und die zweite Trennwand 22 an ihrer jeweiligen Innenseite und an ihrer jeweiligen Außenseite jeweils eine Vielzahl an Rippen 210, 220 auf.

Durch die Rippen 210, 220 wird eine Wärmeaustauschfläche und damit ein Wärmeübergang an der jeweiligen Trennwand 21, 22 vergrößert. Zudem wird durch eine nicht-glatte Oberfläche der Trennwände 21, 22 eine Strömung der Gase durch die Strömungskanäle positiv beeinflusst. Eine Anordnung und/oder Gestaltung der Rippen 210, 220 ist dabei durch eine Fachperson je nach Anwendungsfall und/oder Material der Trennwand 21, 22 geeignet gestaltbar. In Ausgestaltungen ist eine der Trennwände 21, 22 oder sind beide Trennwände 21, 22 aus Keramik. In Ausgestaltungen ist eine der Trennwände 21, 22 oder sind beide Trennwände 21, 22 aus Stahl. In dem dargestellten Ausführungsbeispiel sind die Rippen 210, 220 massive Erhebungen, welche sich in Längsrichtung der Trennwände 21, 22 erstrecken. Die Rippen 210, 220 erstrecken sich in Ausgestaltungen jeweils zumindest über einen im Bereich der Ofenwand 50 angeordneten, rohrförmigen Abschnitt der Trennwände 21, 22. In Ausgestaltungen sind die Rippen 210, 220 in Längsrichtung unterbrochen. In Ausgestaltungen berühren Spitzen Rippen 210, 220 wie in Fig. 2 dargestellt die Innenwand 20 bzw. die Außenwand 25, sodass durch die Rippen 210, 220 die Strömungskanäle in eine Vielzahl kleiner, sich jeweils zwischen zwei Rippen 210, 220 in Längsrichtung erstreckender Kanäle unterteilt ist.

In Ausgestaltungen ist - wie in Fig. 2 dargestellt - zwischen der ersten Trennwand 21 und der zweiten Trennwand 22 eine zumindest abschnittsweise rohrförmige dritte Trennwand 23 vorgesehen ist, sodass ein zwischen der ersten Trennwand 21 und der zweiten Trennwand 22 gebildeter mittlerer Strömungskanal in zwei Teilkanäle unterteilt wird. Die dritte Trennwand 23 ist in dem dargestellten Ausführungsbeispiel an ihrer Innenseite und an ihrer Außenseite frei von Rippen.

In Ausgestaltungen sind die Innenwand 20 und/oder die Außenwand 25 aus einem Material mit einer geringen Wärmleitfähigkeit, um Wärmeverluste in Richtung der Ofenwand 50 und/oder eine Wärmeübertragung an einen von der Innenwand 20 begrenzten Innenkanal zu reduzieren.

In Ausgestaltungen ist - wie in Fig. 2 dargestellt - in einem von der Innenwand 20 begrenzten Innenkanal eine zumindest abschnittsweise rohrförmige vierte Trennwand 24 vorgesehen, sodass zwischen der Innenwand 20 und der dritten Trennwand 24 ein vierter Strömungskanal gebildet ist. Die vierte Trennwand 24 ist in dem dargestellten Ausführungsbeispiel an ihrer Innenseite und an ihrer Außenseite frei von Rippen.

Der in Fig. 1 dargestellte Rekuperatorbrenner 1 weist einen ersten Zufuhr-Anschluss 11, einen zweiten Zufuhr-Anschluss 12 und einen dritten Zufuhr-Anschluss 13 auf. Der erste Zufuhr-Anschluss 11 ist mit einem zwischen der Außenwand 25 und der zweiten Trennwand 22 gebildeten Strömungskanal fluidisch verbunden. Der zweite Zufuhr-Anschluss 12 ist mit einem zwischen der Innenwand 20 und der ersten Trennwand 21 gebildeten Strömungskanal fluidisch verbunden. Der dritte Zufuhr-Anschluss 13 ist mit einem durch die Innenwand 20 begrenzten Innenkanal fluidisch verbunden. In dem dargestellten Ausführungsbeispiel ist an jedem Zufuhr - Anschluss 11, 12, 13 ein Einstellventil 110, 120, 130 vorgesehen.

Der in Fig. 1 dargestellte Rekuperatorbrenner 1 weist weiter ein Abgas-Anschluss 14 für eine Abfuhr von Abgas auf. Der Abgas-Anschluss 14 mit dem zwischen der ersten Trennwand 21 und der zweiten Trennwand 22 gebildeten Strömungskanal fluidisch verbunden. Wie in Fig. 2 dargestellt, ist in Ausgestaltung in dem zwischen der ersten Trennwand 21 und der zweiten Trennwand 22 gebildeten Strömungskanal die dritte Trennwand 23 vorgesehen, sodass der Strömungskanal in zwei durch die dritte Trennwand 23 separierte Teilkanäle unterteilt wird. Die Teilkanäle sind in Ausgestaltungen parallel durchströmbar und weisen einen gemeinsamen Einlass und/oder einen gemeinsamen, zu dem einen Abgas-Anschluss 14 führenden Auslass auf. In Ausgestaltungen ist jedem Teilkanal ein eigener Abgas-Anschluss 14 zugeordnet. An dem Abgas-Anschluss 14, bzw. sofern vorhanden an den zwei Abgas-Anschlüssen, ist in Ausgestaltungen ein Einstellventil 140 vorgesehen.

An einer heißen Seite des Rippenrekuperators 2 ist der Düsenkranz 3 vorgesehen, welcher eine Brennkammer 4 umgibt. Die Brennkammer 4 ist durch einem Wandung 40 umfangsseitig begrenzt. Der in den Figuren dargestellte Düsenkranz 3 umfasst mehrere Düsen 31. Eine Anzahl der Düsen 31 ist je nach Anwendungsfall geeignet wählbar. Beispielsweise sind zwischen acht und 24 Düsen vorgesehen. In dem dargestellten Ausführungsbeispiel sind 16 Düsen vorgesehen. In Ausgestaltungen sind mehr als 24 Düsen vorgesehen.

Die Düsen 31 sind mit einem zwischen der Außenwand 25 und der zweiten Trennwand 22 gebildeten Strömungskanal fluidisch verbunden, sodass ein über den ersten Zufuhr-Anschluss 11 und den Strömungskanal zugeführtes Fluid, insbesondere eine Verbrennungsluft, über die Düsen 31, wie schematisch durch Pfeile in Fig. 1 dargestellt, austreten kann. In dem dargestellten Ausführungsbeispiel ist über die Düsen 31 eine in dem Strömungskanal vorgewärmte Verbrennungsluft stromabwärts der Brennkammer 4 einem Ofenraum 5 zuführbar. Die Düsen 31 sind in Ausgestaltungen gestaltet, um eine flammenlose Oxidation zu bewirken.

Der dargestellte Düsenkranz 3 umfasst einen kegelstumpfförmigen Ringkörper 30. Die Düsen 31 erstrecken sich durch den Ringkörper 30 zwischen in Längsrichtung gegenüberliegenden Enden des Ringkörpers 30. In Ausgestaltungen sind die Düsen 31 wie dargestellt über den Umfang des Ringkörpers 30 gleichmäßig verteilt angeordnet.

Der Ringkörper 30 umfasst weiter mehrere Durchlassöffnungen 32, welche den Ringkörper 30 in Radialrichtung durchdringen. Über die Durchlassöffnungen 32 kann ein Abgas aus dem Ofenraum 5 in einen Innenraum des Ringkörpers 30 in einem Abschnitt zwischen dem Ringkörper 30 und der Wandung 40 der Brennkammer 4 einströmen. Der Innenraum des Ringkörpers 30 ist mit dem mittleren Strömungskanal zwischen der ersten Trennwand 21 und der zweiten Trennwand 22f fluidisch verbunden, sodass Abgas aus dem Ofenraum 5 über die Durchlassöffnungen 32 in den mittleren Strömungskanal einströmen kann.

Die Innenwand 20, die Außenwand 25 und die Trennwände 21, 22, 23, 24 sind jeweils zumindest abschnittsweise rohrförmig und koaxial angeordnet. Wie in Fig. 1 dargestellt, sind Flanschverbindungen 26, 27, 28 vorgesehen, durch welche die einzelnen Wände lösbar miteinander verbunden sind. Insbesondere erlauben die Flanschverbindungen 26, 27, 28 eine zerstörungsfreie Trennung des Rippenrekuperators 2 derart, dass die erste Trennwand 21 und/oder die zweite Trennwand 22 freiliegen, sodass die jeweilige Innenseite und/oder Außenseite für eine Reinigung zugänglich ist.

Der dargestellte Rekuperatorbrenner 1 ist wahlweise mit einem höher kalorischen Gas, beispielsweise Erdgas, oder mit einem niederkalorischen Schwachgas, Wasserstoff, einem Wasserstoff (H2)- haltigen Brenngas und/oder Ammoniak (NK3)-haltigen Brenngas betreibbar.

Der Rippenrekuperator 2 weist im Vergleich zu einem herkömmlichen Rippenrekuperator mit exakt einer, zwei Strömungskanäle trennenden Trennwand eine vergrößerte Wärmeaustauschfläche auf.

Insbesondere können bei einer Verwendung des Rekuperatorbrenner 1 in einem Betrieb mit einem höher kalorischen Brenngas, beispielsweise mit einem Erdgas, zwei durch die an den mittleren Strömungskanal angrenzenden Strömungskanäle geführte Luftströme vorgewärmt werden. Die Luft kann dabei über den ersten Zufuhr-Anschluss 11 und den zweiten Zufuhr-Anschluss 12 zugeführt werden. Der Rekuperatorbrenner 1 ist in Ausgestaltungen eingerichtet, um trotz hoher Vorwärmung der Luft einen Betrieb zu ermöglichen, bei welchem eine erhöhte NOx-Bildung vermieden wird. Beispielsweise ist in Ausgestaltungen vorgesehen, dass über den zweiten Zufuhr-Anschluss 12 zugeführte Primärluft in einem zwischen der ersten Trennwand 21 und der Innenwand 20 gebildeten Strömungskanal einströmt und durch Abgas vorgewärmt wird und der Brennkammer 4 in einem definierten Brenngas/Luftverhältnis zugeführt wird. Über den ersten Zufuhr-Anschluss 11 zugeführte Sekundärluft strömt in einem zwischen der zweiten Trennwand 22 und der Außenwand 25 gebildeten Strömungskanal ein und wird ebenfalls durch Abgas vorgewärmt. Die vorgewärmte Sekundärluft wird dem Ofenraum 5 stromabwärts der Brennkammer 4 zugeführt. Das Brenngas wird über den dritten Zufuhr-Anschluss dem innenliegend der Innenwand 20 angeordneten Strömungskanal und ohne Vorwärmung der Brennkammer 4 zugeführt.

Alternativ kann der Rekuperatorbrenner 1 mit einem H2- und/oder NH3-haltigen Brenngas und/oder einem anderen Brenngas mit einem niedrigen Heizwert mit Vorwärmung des Brenngases und einer zugeführten Sekundärluft betrieben werden.

Der Brennkammer 4 werden dabei eine nicht erwärmte Startluft über den innenliegend der Innenwand 20 angeordneten Strömungskanal und ein in dem Strömungskanal zwischen der Innenwand 20 und der ersten Trennwand 21 vorgewärmtes Brenngas zugeführt. Zudem wird eine über den ersten Zufuhr-Anschluss 11 zugeführte Verbrennungsluft vorgewärmt und dem Ofenraum 5 stromabwärts der Brennkammer 4 über die Düsen 31 zugeführt.

## Patentansprüche

1. Rippenrekuperator umfassend eine zumindest abschnittsweise rohrförmige Innenwand (20), eine zumindest abschnittsweise rohrförmige Außenwand (25) und eine zwischen der Innenwand (20) und der Außenwand (25) angeordnete, zumindest abschnittsweise rohrförmige, wärmeübertragende erste Trennwand (21),
wobei die Innenwand (20), die Außenwand (22) und die erste Trennwand (21) koaxial angeordnet sind,
**dadurch gekennzeichnet, dass**
zwischen der Innenwand (20) und der Außenwand (25) eine zumindest abschnittsweise rohrförmige, wärmeübertragende zweite Trennwand (22) vorgesehen ist, sodass zwischen der Innenwand (20) und der Außenwand (25) mindestens drei Strömungskanäle gebildet sind, wobei die erste Trennwand (21) und/oder die zweite Trennwand (22) an ihrer jeweiligen Innenseite und/oder an ihrer jeweiligen Außenseite Rippen (210, 220) aufweist/aufweisen.

2. Rippenrekuperator nach Anspruch 1, **dadurch gekennzeichnet, dass** zwischen der ersten Trennwand (21) und der zweiten Trennwand (22) eine zumindest abschnittsweise rohrförmige dritte Trennwand (23) vorgesehen ist, sodass ein zwischen der ersten Trennwand (21) und der zweiten Trennwand (22) angeordneter mittlerer Strömungskanal in zwei Teilkanäle unterteilt ist.

3. Rippenrekuperator nach Anspruch 2, **dadurch gekennzeichnet, dass** durch die dritte Trennwand (23) separierte Teilkanäle parallel durchströmbar sind und einen gemeinsamen Einlass und/oder einen gemeinsamen Auslass aufweisen.

4. Rippenrekuperator nach Anspruch 2 oder 3, **dadurch gekennzeichnet, dass** die dritte Trennwand (23) an ihrer Innenseite und/oder an ihrer Außenseite frei von Rippen ist.

5. Rippenrekuperator nach einem der Ansprüche 1 bis 4, **dadurch gekennzeichnet, dass** in einem von der Innenwand (20) begrenzten Innenkanal eine zumindest abschnittsweise rohrförmige vierte Trennwand (24) vorgesehen ist, sodass zwischen der Innenwand (20) und der dritten Trennwand (24) ein vierter Strömungskanal gebildet ist, wobei insbesondere die vierte Trennwand (24) zumindest an ihrer Innenseite, insbesondere an ihrer Innenseite und ihrer Außenseite, frei von Rippen ist.

6. Rippenrekuperator nach einem der Ansprüche 1 bis 5, **dadurch gekennzeichnet, dass** eine die erste Trennwand (21) umfassend Baugruppe des Rekuperators und eine die zweite Trennwand (22) umfassende Baugruppe des Rekuperators über eine Flanschverbindung (26, 27, 28) lösbar miteinander verbunden sind.

7. Rippenrekuperator nach einem der Ansprüche 1 bis 6, **dadurch gekennzeichnet, dass** die erste Trennwand (21) und/oder die zweite Trennwand (22) aus Keramik und/oder Stahl gefertigt ist.

8. Rekuperatorbrenner umfassend einen Rippenrekuperator nach einem der Ansprüche 1 bis 7.

9. Rekuperatorbrenner nach Anspruch 8, **dadurch gekennzeichnet, dass** ein erster Zufuhr-Anschluss (11), insbesondere für eine Zufuhr von Sekundärluft, vorgesehen ist, wobei der erste Zufuhr-Anschluss (11) mit dem zwischen der Außenwand (25) und der zweiten Trennwand (22) gebildeten Strömungskanal fluidisch verbunden ist, wobei insbesondere an dem ersten Zufuhr-Anschluss (11) ein Einstellventil (110) vorgesehen ist.

10. Rekuperatorbrenner nach Anspruch 8 oder 9, **dadurch gekennzeichnet, dass** ein Abgas-Anschluss (14) für eine Abfuhr von Abgas vorgesehen ist, wobei der Abgas-Anschluss (14) mit dem zwischen der ersten Trennwand (21) und der zweiten Trennwand (22) gebildeten Strömungskanal fluidisch verbunden ist, wobei insbesondere an dem Abgas-Anschluss ein Einstellventil (140) vorgesehen ist.

11. Rekuperatorbrenner nach Anspruch 8, 9 oder 10, **dadurch gekennzeichnet, dass** ein zweiter Zufuhr-Anschluss (12) vorgesehen ist, wobei der zweite Zufuhr-Anschluss (12) mit dem zwischen der Innenwand (20) und der ersten Trennwand (21) gebildeten Strömungskanal fluidisch verbunden ist, wobei insbesondere der zweite Zufuhr-Anschluss (21) wahlweise als Anschluss für eine Zufuhr von Primärluft und/oder als Anschluss für eine Zufuhr von Brenngas, insbesondere Wasserstoff, Wasserstoff-haltigem Brenngas, Ammoniakhaltigem Brenngas und/oder Schwachgas, nutzbar ist, wobei insbesondere an dem zweiten Zufuhr-Anschluss (12) ein Einstellventil (120) vorgesehen ist.

12. Rekuperatorbrenner nach einem der Ansprüche 8 bis 11, **dadurch gekennzeichnet, dass** ein dritter Zufuhr-Anschluss (13) vorgesehen ist, wobei der dritte Zufuhr-Anschluss (13) mit dem zwischen der Innenwand (20) und der vierten Trennwand (24) gebildeten Strömungskanal fluidisch verbunden ist, wobei insbesondere der dritte Zufuhr-Anschluss (13) wahlweise als Anschluss für eine Zufuhr von Erdgas und/oder als Anschluss für eine Zufuhr von Startluft für einen Betrieb mit einem alternative Brenngas, beispielsweise für einen Wasserstoffbetrieb, nutzbar ist, wobei insbesondere an dem dritten Zufuhr-Anschluss (13) ein Einstellventil (130) vorgesehen ist.

13. Rekuperatorbrenner nach einem der Ansprüche 8 bis 12, **dadurch gekennzeichnet, dass** an einer heißen Seite des Rippenrekuperators (2) ein Düsenkranz (3) umfassend mehrere, über dem Umfang verteilt angeordnete Düsen (31) vorgesehen ist, wobei die Düsen (31) mit einem zwischen der Außenwand (25) und der zweiten Trennwand (22) gebildeten Strömungskanal fluidisch verbunden sind.

14. Rekuperatorbrenner nach Anspruch 13, **dadurch gekennzeichnet, dass** der Düsenkranz (3) einen die Düsen (31) aufweisenden Ringkörper (30) umfasst, wobei ein Innenraum des Ringkörpers (30) mit einem zwischen der ersten Trennwand (21) und der zweiten Trennwand (22) gebildeten Strömungskanal fluidisch verbunden ist, wobei insbesondere der Ringkörper (30) mehreren, insbesondere jeweils zwischen zwei Düsen (31) angeordnete, Durchlassöffnungen (32) aufweist.

15. Rekuperatorbrenner nach Anspruch 13 oder 14, **dadurch gekennzeichnet, dass** der Düsenkranz (3) eine Brennkammer (4) umgibt, wobei ein zwischen der ersten Trennwand (21) und der Innenwand (20) gebildeter Strömungskanal in der Brennkammer (4) mündet.
